# EUROPEAN PATENT APPLICATION

(11) **EP 4 725 584 A1**
(43) Date of publication of application: **15.04.2026**
(21) Application number: 24818432.7
(22) Date of filing: 09.05.2024
(51) Int. Cl.: B01D 50/00, B01D 46/24, B01D 53/78

(54) **DUST COLLECTION STRUCTURE AND DUST COLLECTION FILTRATION STRUCTURE**

(30) Priority: 08.06.2023 CN 202321460929 U
(71) Applicant: Toneluck Product Technology (Huizhou) Co., Ltd., Huizhou, Guangdong 516255 (CN)
(72) Inventor: WONG, Tsz Hung Rabi, Huizhou, Guangdong 516255 (CN); PENG, Guang Tao, Huizhou, Guangdong 516255 (CN)
(74) Representative: Cabinet Chaillot
(86) International application number: PCT/CN2024/091994
(87) International publication number: WO 2024/250899

(57) **Abstract**

A dust collection structure and a dust collection filtration structure. The dust collection structure comprises a dust collection structure body (1). A ventilation channel (11) is provided inside the dust collection structure body (1), ventilation openings (111) are provided at two ends of the ventilation channel (11), and the ventilation channel (11) is in communication with the outside of the dust collection structure body (1) by means of the ventilation openings (111). The dust collection filtration structure comprises a support plate (2). Several ventilation holes (21) are distributed on the support plate (2), each ventilation hole (21) penetrating the support plate (2). The dust collection filtration structure further comprises several dust collection structures, each dust collection structure being laid on the support plate (2).

## Description

### TECHNICAL FIELD

The present invention relates to the field of dust collection technology, and particularly to a dust collection structure and a dust collection filtration structure.

### BACKGROUND

With the rapid development of the industrial economy, the number of industrial enterprises has increased rapidly. During the production operations of the industrial enterprises, industrial exhaust gas or other gases are often generated. In an emission process, these industrial exhaust gases or other gases are often mixed with impurities or dust. Random emission can result in serious environmental pollution. For the purpose of environmental protection, it is necessary to filter and purify the industrial exhaust gases or other gases before recovery or emission to meet standards for emission or recovery.

For existing industrial vacuum cleaners or household vacuum cleaners, filter cloth or other filtration layers are generally used for filtration. During filtration, when the industrial exhaust gas or other gases flow through the filtration layers, the filter cloth or other filtration layers adsorb or filter out the dust or impurities in the industrial exhaust gases or other gases, thereby achieving the filtration effect. For some industrial vacuum cleaners or household vacuum cleaners, substances such as activated carbon are also added to the filter cloth or other filtration layers to enhance the filtration effect. However, during use, as the use time increases, a large amount of dust or impurities will accumulate in the filter cloth or other filtration layers, causing blockage of the filter cloth or other filtration layers. This leads to difficulty in replacement of the filter cloth or other filtration layers and affects subsequent use.

### SUMMARY

The present invention provides a dust collection structure. When air containing dust flows through the dust collection structure, an outer surface of the dust collection structure and internal ventilation channels thereof can adsorb dust from the air, thereby achieving the dust collection effect. In addition, the dust collection structure is easy to clean and replace during use, which can solve a problem that filtration layers in existing industrial vacuum cleaners or household vacuum cleaners are difficult to replace (or have high replacement cost ) after long-term use, thus affecting subsequent use.

The dust collection structure provided by this application includes a dust collection structure body, a ventilation channel is provided inside the dust collection structure body, ventilation openings are provided at two ends of the ventilation channel, and the ventilation channel is connected to an outside of the dust collection structure body through the ventilation openings.

Furthermore, the ventilation channel is arranged in a curved configuration.

Furthermore, the ventilation channel is arranged in an irregularly curved shape.

Furthermore, two or more ventilation channels are provided inside the dust collection structure body.

Furthermore, among the two or more ventilation channels inside the dust collection structure body, at least two ventilation channels are interconnected or intersect with each other.

Furthermore, fluffs are provided on an inner wall of the ventilation channel, and are used for dust adhesion.

Furthermore, a hydrophilic layer is provided on an outer wall of the dust collection structure body.

Furthermore, a hydrophilic layer is provided on an inner wall of the ventilation channel.

Furthermore, a plurality of grooves are provided in an outer wall of the dust collection structure body.

Furthermore, the dust collection structure body is generally spherical or ellipsoidal in shape.

A dust collection filtration structure, including a support plate, where a plurality of ventilation holes are distributed on the support plate, and each ventilation hole penetrates the support plate; and further including a plurality of dust collection structures, where each dust collection structure is laid on the support plate.

Furthermore, the dust collection filtration structure further includes a spray structure, where the spray structure is located above each dust collection structure, and is used for spraying dust collection liquid onto each dust collection structure.

Beneficial effects achieved by the present invention are as follows:
In the present invention, the ventilation channel is provided inside the dust collection structure body, and the two ends of the ventilation channel are connected to the outside of the dust collection structure body through the ventilation openings, such that the outside of the dust collection structure body and the ventilation channel can come into contact with exhaust gas to adsorb dust from the exhaust gas so as to filtrate the exhaust gas. During use, a plurality of dust collection structure bodies can be laid out (preferably in multiple layers) to form a filtration layer. When the exhaust gas flows through the filtration layer, the exhaust gas not only flows through an outer surface of the dust collection structure body, but also through the ventilation channel, and the ventilation channel results in an increased contact area between the dust collection structure body and the exhaust gas. Dust or waste particles mixed in the exhaust gas impact the outer surface of the dust collection structure body and an inner surface of the ventilation channel, and are adhered to the outer surface of the dust collection structure body and the inner surface of the ventilation channel, thereby completing dust collection filtration.

In addition, when a large amount of dust is adhered to the outer surface of the dust collection structure body and the inner surface of the ventilation channel, it is only necessary to simply replace the dust collection structure body. The replaced dust collection structure body can be reused after being rinsed, which is conducive to saving use costs. Furthermore, compared with conventional filtration materials such as filter cloth and activated carbon, cleaning the dust collection structure body is more convenient and faster, which helps to reduce cleaning costs.

### BRIEF DESCRIPTION OF DRAWINGS

FIG. 1 is a schematic structural diagram of a dust collection structure provided in Embodiment 1;
FIG. 2 is a sectional view of the dust collection structure provided in Embodiment 1;
FIG. 3 is an enlarged schematic diagram of area A in FIG. 2; and
FIG. 4 is a schematic structural diagram of a dust collection filtration structure provided in Embodiment 2.

### Reference numerals:

1-dust collection structure body; 11-ventilation channel; 111-ventilation opening; 12-fluff; 13-groove; 14-hydrophilic layer; 2-support plate; 21-ventilation hole; 3-spray structure.

The accompanying drawings are intended for exemplary illustration only and should not be construed as limitations to this patent. To better illustrate this embodiment, some components in the accompanying drawings may be omitted, enlarged, or narrowed, which do not represent the actual product size. For those skilled in the art, it is understandable that some well-known structures and their descriptions in the accompanying drawings may be omitted. Identical or similar reference numerals correspond to identical or similar components. Terms describing positional relationships in the accompanying drawings are only intended for exemplary illustration and should not be construed as limitations to this patent.

### DETAILED DESCRIPTION OF EMBODIMENTS

It should be noted that, where there is no conflict, the embodiments in the present application and the technical features in the embodiments may be combined with each other. The detailed descriptions in the specific embodiments shall be construed as explanations of the purpose of the present application, and shall not be regarded as undue limitations on the present application.

To make the objectives, technical solutions and advantages of the embodiments of the present application clearer, the specific technical solutions of the present application will be described in further detail below in conjunction with the drawings in the embodiments of the present application. The following embodiments are intended to illustrate the present application, but are not used to limit the scope of the present application.

In the embodiments of the present application, the terms "first" and "second" are only used for descriptive purposes, and shall not be construed as indicating or implying relative importance or implicitly specifying the quantity of the indicated technical features. Therefore, the features defined with "first" and "second" may explicitly or implicitly include one or more of such features. In the description of the embodiments of the present application, unless otherwise specified, the meaning of "plurality" is two or more.

In addition, in the embodiments of the present application, positional terms such as "upper", "lower", "left" and "right" are defined relative to the schematic placement orientation of the components in the drawings. It should be understood that these directional terms are relative concepts, which are used for relative description and clarification, and may change accordingly with the change of the placement orientation of the components in the drawings.

In the embodiments of the present application, unless otherwise clearly specified and defined, the term "connection" shall be construed in a broad sense. For example, "connection" may be a fixed connection, a detachable connection, or integrated into one body; it may be a direct connection, or an indirect connection through an intermediate medium.

In the embodiments of the present application, the terms "include", "comprise" or any other variants thereof are intended to cover non-exclusive inclusion, so that a process, method, article or device including a series of elements not only includes those elements, but also includes other elements not explicitly listed, or also includes inherent elements of such process, method, article or device. Without more restrictions, the element defined by the phrase "including one..." does not exclude the existence of another identical element in the process, method, article or device that includes the element.

In the embodiments of the present application, words such as "exemplary" or "for example" are used to serve as examples, illustrations or explanations. Any embodiment or design solution described as "exemplary" or "for example" in the embodiments of the present application shall not be construed as being more preferred or advantageous than other embodiments or design solutions. Specifically, the use of words such as "exemplary" or "for example" is intended to present the relevant concepts in a specific manner.

The following provides a detailed description of the technical solutions of the present invention with reference to specific drawings.

### Embodiment 1

A dust collection structure, as a filtration material (or filtration unit) in industrial vacuum cleaners or household vacuum cleaners, is used for filtering dust in exhaust gas generated during factory production operations or household life.

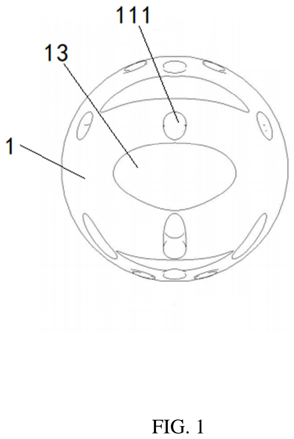

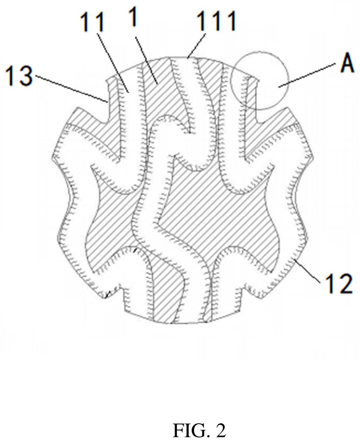

Specifically, refer to FIG. 1 and FIG. 2. The dust collection structure includes a dust collection structure body 1, where a ventilation channel 11 is provided inside the dust collection structure body 1, ventilation openings 111 are provided at two ends of the ventilation channel 11, and the ventilation channel 11 is connected to an outside of the dust collection structure body 1 through the ventilation openings 111.

In this embodiment, the ventilation channel 11 is provided inside the dust collection structure body 1, and two ends of the ventilation channel 11 are connected to the outside of the dust collection structure body 1 through the ventilation openings 111, such that the outside of the dust collection structure body 1 and the ventilation channel 11 can come into contact with exhaust gas to adsorb dust from the exhaust gas so as to filtrate the exhaust gas.

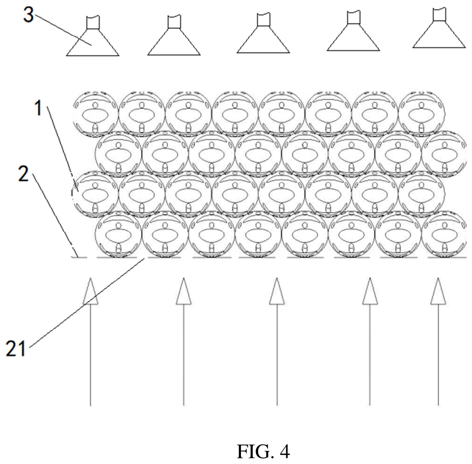

During use, a plurality of dust collection structure bodies 1 can be laid out (preferably in multiple layers, as shown in FIG. 4) to form a filtration layer. When the exhaust gas flows through the filtration layer, the exhaust gas not only flows through an outer surface of the dust collection structure body 1, but also through the ventilation channel 11. Dust or waste particles mixed in the exhaust gas impact the outer surface of the dust collection structure body 1 and an inner surface of the ventilation channel 11, and are adhered to the outer surface of the dust collection structure body 1 and the inner surface of the ventilation channel 11, thereby completing dust collection filtration. When a large amount of dust is adhered to the outer surface of the dust collection structure body 1 and the inner surface of the ventilation channel 11, it is only necessary to simply replace the dust collection structure body 1. The replaced dust collection structure body 1 can be reused after being rinsed, thereby saving use costs. Furthermore, compared with conventional filtration materials such as filter cloth and activated carbon, cleaning the dust collection structure body 1 is more convenient and faster, which helps to reduce cleaning costs.

Preferably, refer to FIG. 2. The ventilation channel 11 is arranged inside the dust collection structure body 1 in a curved configuration. The curved ventilation channel 11 can extend a path of the ventilation channel 11, increasing a contact area between the ventilation channel 11 and the exhaust gas, thereby adsorbing more dust from the exhaust gas and improving the utilization of internal space of the dust collection structure body 1. In addition, when the exhaust gas flows through the ventilation channel 11, airflow inside the ventilation channel 11 causes direction change due to the curved configuration of the ventilation channel 11, generating a centrifugal force in an airflow direction change process. Dust or particles in the exhaust gas will collide with the inner wall of the ventilation channel 11 under the action of the centrifugal force, making it easier for the dust or particles in the exhaust gas to be adsorbed onto the inner wall of the ventilation channel 11, thereby achieving better filtration effect. Preferably, as shown in FIG. 2, the ventilation channel 11 is arranged in an irregularly curved shape, forming more bends in the ventilation channel 11 and generating more direction changes, such that the dust or particles in the exhaust gas collide with the inner wall of the ventilation channel 11 under multiple centrifugal actions to allow more dust or particles in the exhaust gas to be adhered inside the ventilation channel 11, achieving better filtration effect.

Preferably, further refer to FIG. 2. Two or more ventilation channels 11 are provided inside the dust collection structure body 1. A plurality of ventilation channels 11 are provided inside the dust collection structure body 1, which is conducive to fully utilizing the internal space of the dust collection structure body 1, increases an adsorption area, and enhances the utilization of the internal space of the dust collection structure body 1.

Preferably, among the two or more ventilation channels 11 inside the dust collection structure body 1, at least two ventilation channels 11 are interconnected or intersect with each other. Interconnected or intersecting ventilation channels 11 make the internal channels of the dust collection structure body 1 more complex. When the exhaust gas flows through the inside of the dust collection structure body 1, the direction changes become more complex, generating more centrifugal airflow, such that the dust or particles in the exhaust gas are more likely to collide with the inner wall of the ventilation channel 11, making it easier for the dust or particles in the exhaust gas to be adhered inside the ventilation channel 11, thereby achieving better dust collection effect.

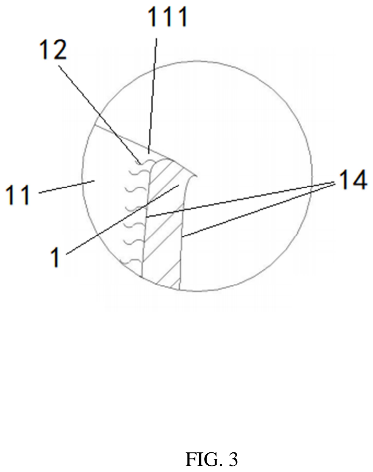

Refer to FIG. 3. Fluffs 12 are provided on an inner wall of the ventilation channel 11, and are used for dust adhesion. With the provision of the fluffs 12, the dust or particles in the exhaust gas can come into contact the fluffs 12 and be adhered onto the fluffs 12 when the exhaust gas flows through the ventilation channel 11, thereby more fully adsorbing dust from the exhaust gas (forming a bionic structure similar to human nostrils). In this embodiment, the fluffs 12 may be made of flexible silicone material, and can not only withstand high-temperature gases generated in factories, but also have strong adhesion and better dust collection effect. In addition, the fluffs are easy to clean and can be reused after being rinsed with liquid.

Continue to refer to FIG. 3. A hydrophilic layer 14 is provided on an outer wall of the dust collection structure body 1, and may also be provided on an inner wall of the ventilation channel 11. During use, as shown in FIG. 4, clean water can be sprayed onto the dust collection structure body 1, and is adhered to the hydrophilic layer 14. The clean water more easily adsorbs the dust or particles in the exhaust gas, achieving better dust collection effect. In addition, after water on the outer wall of the dust collection structure body 1 and the inner wall of the ventilation channel 11 adheres to dust, it flows and detaches from the dust collection structure body 1 under gravity or water flow, carrying away the dust and preventing dust accumulation. This ensures that the surface of the dust collection structure becomes cleaner, enabling subsequent continued use thereof, achieving simultaneous cleaning and adsorption, and saving the time required for separate cleaning later.

A plurality of grooves 13 are provided in an outer wall of the dust collection structure body 1. With the provision of the grooves 13, the contact area between the outer surface of the dust collection structure body 1 and the exhaust gas can be increased, thereby adsorbing more dust from the exhaust gas and improving the utilization of the dust collection structure. Meanwhile, when the dust collection structure body 1 is used (as shown in FIG. 4), the plurality of dust collection structure bodies 1 are often stacked together. The grooves 13 can ensure sufficient gaps between the dust collection structure bodies 1, allowing the exhaust gas to flow between the dust collection structure bodies 1.

The dust collection structure body 1 is generally spherical or ellipsoidal in shape. The spherical or ellipsoidal configuration ensures sufficient gaps between the dust collection structure bodies 1 when the dust collection structure bodies are stacked, allowing the exhaust gas to flow. In addition, during airflow circulation, the spherical or ellipsoidal dust collection structure body 1 can rotate randomly under a wind force, thereby randomly changing a windward side of the dust collection structure body 1, and ensuring that all sides of the dust collection structure body 1 and all ventilation channels 11 inside the dust collection structure body 1 are exposed to exhaust gas flow.

The dust collection structure body 1 is made of recyclable materials, for example, plastics. For conventional activated carbon adsorption, it is often necessary to replace the material after dust adsorption, which increases the dust collection cost for factories or households. With the use of the recyclable materials, the dust collection structure body can achieve dust collection function and can be reused after being cleaned, reducing dust collection costs. Moreover, when combined with the spray structure, the dust collection structure body can achieve simultaneous cleaning and adsorption, saving the time required for subsequent separate cleaning or replacement.

### Embodiment 2

Refer to FIG. 4. A dust collection filtration structure is provided and includes a support plate 2, a plurality of ventilation holes 21 are distributed on the support plate 2, and each ventilation hole 21 penetrates the support plate 2. The dust collection filtration structure includes a plurality of dust collection structures in Embodiment 1, and each dust collection structure is laid on the support plate 2. As shown in FIG. 4, according to different dust collection requirements, the dust collection structures can be laid in multiple layers to achieve better dust collection effect.

The dust collection filtration structure further includes a spray structure 3, where the spray structure 3 is located above each dust collection structure and is used for spraying dust collection liquid (in this embodiment, clean water is selected) onto each dust collection structure.

In specific use, the spray structure 3 at a top sprays the clean water onto each dust collection structure, and the clean water is adhered to an outer wall of each dust collection structure body 1 and an inner wall of the ventilation channel 11. When exhaust gas flows through the dust collection filtration structure, the clean water on the outer wall of each dust collection structure body 1 and the inner wall of the ventilation channel 11 can adhere to dust or particulate impurities mixed in the exhaust gas.

Specifically, during use, the exhaust gas flows upward through the support plate 2 at a bottom, and penetrates the ventilation holes 21 As the exhaust gas flows through the dust collection structure body 1, the outer wall of the dust collection structure body 1 and the inner wall of the ventilation channel 11 adsorb the dust in the exhaust gas, and then the exhaust gas is discharged and continues to flow upward. During use, the clean water sprayed by the spray structure (3) can adsorb dust in the exhaust gas and clean the dust adsorbed on the outer wall of the dust collection structure body 1 and the inner wall of the ventilation channel 11, so as to prolong the service life of the dust collection structure body 1.

Serial numbers of the embodiments described above are for descriptive purposes only and do not indicate the merits of the embodiments. The above are merely preferred embodiments of the present application and do not limit the scope of the patent. Any equivalent structural or process transformations based on the content of this specification and drawings, or direct or indirect applications in other related technical fields, are likewise included within the scope of patent protection of this application.

## Claims

1. A dust collection structure, **characterized by** comprising: a dust collection structure body (1), wherein a ventilation channel (11) is provided inside the dust collection structure body (1), ventilation openings (111) are provided at two ends of the ventilation channel (11), and the ventilation channel (11) is connected to an outside of the dust collection structure body (1) through the ventilation openings (111).

2. The dust collection structure according to claim 1, **characterized in that** the ventilation channel (11) is arranged in a curved configuration.

3. The dust collection structure according to claim 2, **characterized in that** two or more ventilation channels (11) are provided inside the dust collection structure body (1).

4. The dust collection structure according to claim 3, **characterized in that**, among the two or more ventilation channels (11) inside the dust collection structure body (1), at least two ventilation channels (11) are interconnected or intersect with each other.

5. The dust collection structure according to any one of claims 1 to 4, **characterized in that** fluffs (12) are provided on an inner wall of the ventilation channel (11), and are used for dust adhesion.

6. The dust collection structure according to any one of claims 1 to 4, **characterized in that** a hydrophilic layer (14) is provided on an outer wall of the dust collection structure body (1).

7. The dust collection structure according to any one of claims 1 to 4, **characterized in that** a hydrophilic layer (14) is provided on an inner wall of the ventilation channel (11).

8. The dust collection structure according to any one of claims 1 to 4, **characterized in that** a plurality of grooves (13) are provided in an outer wall of the dust collection structure body (1).

9. The dust collection structure according to any one of claims 1 to 4, **characterized in that** the dust collection structure body (1) is generally spherical or ellipsoidal in shape.

10. A dust collection filtration structure, **characterized by** comprising a support plate (2), wherein a plurality of ventilation holes (21) are distributed on the support plate (2), and each ventilation hole (21) penetrates the support plate (2); and further comprising a plurality of dust collection structures according to any one of claims 1 to 9, wherein each dust collection structure is laid on the support plate (2).

11. The dust collection filtration structure according to claim 10, **characterized by** further comprising a spray structure (3), wherein the spray structure (3) is located above each dust collection structure, and is used for spraying dust collection liquid onto each dust collection structure.
